# EUROPEAN PATENT SPECIFICATION

(11) **EP 1 657 097 B1**
(45) Date of publication and mention of the grant of the patent: **24.03.2010**
(21) Application number: 05380251.8
(22) Date of filing: 16.11.2005
(51) Int. Cl.: B60K 15/04

(54) **Body of a fuel cap unit fitted to the fuel pipe, and its production processes**
Körper einer Verschlussdeckeleinheit verbunden mit einem Tankeinfüllstutzen und Verfahren zu seiner Herstellung
Corps de bouchon de réservoir de carburant couplé à un tube de remplissage et son procédé de fabrication

(30) Priority: 16.11.2004 ES 200402751
(43) Date of publication of application: 17.05.2006
(73) Proprietor: Maier, S. Coop., 48300 Gernika (ES)
(72) Inventor: Mandaluniz Bilbao, Joseba, 48300 Gernika (ES)
(74) Representative: Urteaga Simarro, José Antonio

(56) References cited:
- DE-A1- 10 026 841
- DE-A1- 19 827 194
- US-A- 5 090 760
- PATENT ABSTRACTS OF JAPAN vol. 009, no. 114 (M-380), 18 May 1985 (1985-05-18) & JP 60 001026 A (NISSAN JIDOSHA KK), 7 January 1985 (1985-01-07)

## Description

### Technical field

The invention concerns the body of a fuel cap unit used to cover the fuel filling area of a motor vehicle, as well as the production processes of this body.

### Prior art

The fuel loading area of a motor vehicle, which is the area that fills the fuel tank of the vehicle, is characterised as an area which is aesthetically unattractive, tending to accumulate dirt, liquids or other undesirable elements. For this reason, the fuel loading area is generally covered with a cap which offers an attractive finish in line with the rest of the bodywork and which prevents the entrance of undesirable external agents.

There is a wide range of types of fuel caps available, among which are the fuel cap units provided with a body. In these units, the fuel cap is linked to a body in the form of a basin. The fuel cap unit is arranged so that the body is covered by the cap and is situated in the fuel filling area, and the body is connected to the fuel pipe which links the filling area to the fuel tank.

The design of a fuel cap unit with a body must fulfil certain requirements. On one hand, it must guarantee leak-tightness, i.e. to be able to prevent the entrance of external agents in the fuel filling area and interior of the body. Also, the unit must be capable of absorbing any dispersions which may occur in the fuel filling area, the fuel pipe and other receiving elements to which the unit is connected. This means to say that the design of the unit must be able to guarantee the correct assembly of the unit to these receiving elements, and the correct operation of them all, free of internal tensions even if the position of the receiving elements undergoes some variation with respect to their nominal position, generally due to problems in the design, manufacture, assembly, thermal expansions and contractions, or other reasons.

Among the fuel cap units fitted with a body, the EP-0736406-B1 document of Volkswagen Aktiengesellschaft describes a fuel cap unit in which the body is produced using two types of materials, one of which is hard (Polypropylene with reinforced fibre glass) and another of which is soft and elastic (ethylene-propylene rubber or ethylene-propylene diene polymer (terpolymer) -EPDM-). The part of the body that is made out of a soft and elastic material has an orifice into which the end of the fuel pipe is fitted, so that the soft material is theoretically adjusted to the fuel pipe. However, although the soft material is capable of adjusting to a large number of changes in the position of the fuel pipe and other elements, hence improving the dispersion absorption capacity of the unit, it is expected that the adjustment between the soft material and the fuel pipe is not tight enough and in significant variations in the position of the fuel pipe, gaps between the body and the pipe will appear. As a result, there is expected to be a lack of leak-tightness that could cause that rainwater, which is splashed by the wheels while the vehicle is in motion, enters the body of the fuel cap unit through these gaps, or that rainwater, fuel overflow or other liquids present in the fuel cap unit slip through these gaps into the internal area of the vehicle.

US-A-5 090 760 discloses a body of a fuel cap unit according to the preamble of claim 1.

The objective of the invention is to obtain a fuel cap unit which appropriately absorbs dispersions of the elements upon which it is assembled, most especially the variations in position of the fuel pipe to which it is connected.

### Detailed description of the invention

To achieve the aforementioned objectives, a body of a fuel cap unit is defined, where said body is an element similar in shape to a basin, to which the fuel cap is connected and which has a hard part and a soft part, with the peculiarity that the soft part is ended in the lowest or closest section to the fuel pipe by a hard base, made out of the same material or a different material to that of the hard part.

The hard base is the area of the body to which the fuel pipe is connected, and includes the necessary connection means for connection to the fuel pipe. The connection between the fuel pipe and the body is made by bringing the hard base closer to the end of the fuel pipe and securing both of them using the aforementioned connection means.

The hard base may be optionally connected to the hard part using one or more bridges made out of hard material. Therefore, there are different embodiments of the invention, with or without hard material bridges.

Preferably, the connection means shall be screws inserted into some orifices present in the hard base and at the end of the fuel pipe. However, other connection or assembly means such as clips, adhesive, etc., shall be equally valid.

The hard base may also be made in multiple shapes in order to complement the end of the fuel pipe used.

A fuel cap unit body like that of the invention provides a correct dispersion absorption because the area of the body where the body is connected to the fuel pipe is different to the area of the body which absorbs the dispersions, therefore having both functions performed optimally without the correct performance of one of them negatively affecting the performance of the other. This advantage is achieved by having the connection between the end of the fuel pipe and the body taken place in the hard base, while having the absorption of dispersions performed by the soft part of the body and in the hard material bridges, if available.

The body of the invention may also include a second area or crown made of a soft material, located in the upper section, close to the cap, around the whole perimeter of the rigid part of the body. This crown of soft material is included to offer improved attractiveness and leak-tightness, and to avoid a possible rattling of the fuel cap against the body. The present invention does claim this crown, but does claim the application of the innovative aspects of the present invention to bodies of the fuel cap unit with or without a crown of soft material.

The fuel cap unit body of the invention may be manufactured following different production methods, which are detailed below.

A first production method of the body is based on a consecutive injection of the hard and soft parts of which the body is made up. In the first stage, a hard material is injected in order to form the hard part, the hard base and the linking bridges between both, if applicable. Subsequently, and following its solidification, soft material shall be over-injected on these hard parts to form the soft part, and to form the crown and soft bridges, when appropriate.

A second production method of the body consists of making the hard part, the soft part and the hard base separately, in three independent injection processes. Afterwards, the three pieces are put together by means of either an adjustment or tightening of the soft part to the hard part and the hard base by a diameter difference (whereby the soft part is streched until it manages to embrace and secure the other two pieces), or by means of an adhesive or any other appropriate linking means. The body that is manufactured according to this method will not have hard bridges connecting the hard part to the hard base.

A third production method of the body is a combination of the aforementioned methods, in which, on one hand, either the hard part or the hard base is produced by means of an injection process, and subsequently, following its solidification, soft material is injected on this hard piece to form the soft part. On another hand, the remaining hard element out of the hard part and the hard base is produced in a separate injection process and is afterwards connected to the soft part by means of either an adjustment or tightening of the soft part over this remaining hard element by a diameter difference (whereby the soft part is stretched until it manages to secure the other two pieces), or bymeans of an adhesive or any other appropriate linking means. The body that is manufactured according to this method will not have hard bridges connecting the hard part to the hard base.

The hard part, the hard base, and any bridges between them both may be made of the same hard material or of different hard materials, being said materials preferably polypropylene (PP), polyamide (PA), polyoxymethylene or polyformaldehide or polyacetal (POM), or polyethylene (PE). Similarly, the soft part and the optional soft crown and bridges may be made of the same soft material or of different soft materials, whereby the materials used in this case are preferably ethylene propylene diene polymer-(terpolymer) (EPDM), polyvinyl chloride (PVC), Styrene Butadiene Styrene (SBS), or Acryl-nitrile Butadiene Rubber (NBR). In the event of producing the body according to the invention following a production process which includes an over-injection process of soft material on hard material, the materials should be selected so that there is preferably a chemical compatibility between the hard material and the soft material in such a way that adhesion between them is produced.

### Description of the drawings

The details of the invention can be seen in the accompanying figures, which do not intend to be limitative to the scope of the invention:
- Figure 1 shows a perspective of the preferred embodiment of the fuel cap unit body of the invention.
- Figure 2 shows another perspective of the body of Figure 1.

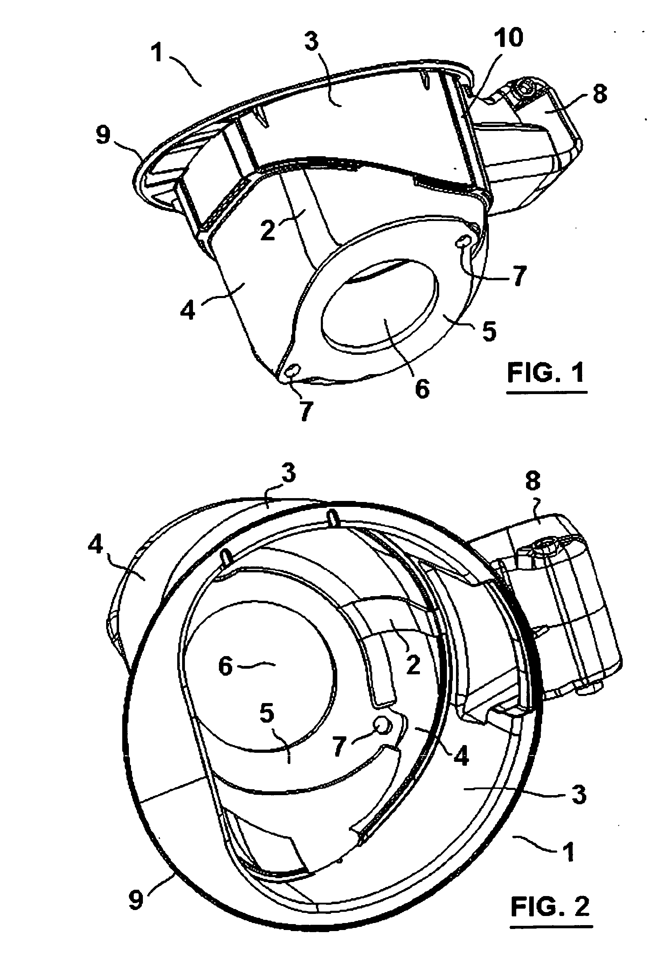

Figure 1 represents a perspective of the body (1) of a fuel cap unit. In this figure, it is appreciated how the body (1) presents a shape similar to a basin, with an protruding area or box (8) to which the fuel cap, which is not shown, is connected. The body (1) comprises a hard part (3) located in the upper section of the body terminating in a crown (9), a soft part (4) located in the mid-section and a hard base (5) located in the lower section. The soft part (4) and the crown (9) are made out of the same or different soft material and, in the present embodiment, are connected by a soft bridge (10). Similarly, the hard part (3) and the hard base (5) are made out of the same or different hard materials and, in the present embodiment, are connected by bridges (2) of hard material.

The fuel pipe, which is not shown, ends in a piece which is brought closer and attached to the hard base (5) so that the end of the fuel pipe is situated in an orifice (6) of the hard base (5). The connection between the fuel pipe and the hard base (5) is made by securing the end of the pipe through some holes (7) of the hard base (5) using screws or other connection means such as clips, adhesive, etc.

Once the hard base (5) is connected to the fuel pipe, any dispersions or position variations which may arise in the fuel pipe shall be absorbed by the soft part (4) and the bridges (2) of the body (1). The bridges (2) should be sufficiently reduced in dimension so that they are not so rigid as to prevent the correct dispersion absorption.

Figure 2 shows the body (1) of Figure 1 seen from a perspective which allows the interior of the body (1) to be appreciated. Once again, it is visible how the hard part (3) is connected to the hard base (5) by means of a bridge (2), and how the soft part (4) is located between the hard part (3) and the hard base (5), and how the soft part (4) and the bridges (2) are able to absorb any possible dispersions.

## Claims

1. Body (1) of a fuel cap unit, where the body (1) is an element approximately in the shape of a basin, to which the fuel cap of the fuel cap unit and the end of the fuel pipe of a motor vehicle are connected, where the body (1) comprises a hard part (3) made out of a hard material and a soft part (4) made out of a soft material, wherein the soft part (4) is followed by a hard base (5) which is made out of a hard material, positioned in such a way that the soft part (4) is located substantially between the hard base (5) and the hard part (3), the body (1) being **characterized in that**
- the hard base (5), to which the end of the fuel pipe is to be connected, provides the connection means (7) for the connection of the end of the fuel pipe;
- the hard base (5) is connected to the hard part (3) by means of at least one bridge (2) of hard material.

2. Body (1) of a fuel cap unit according to claim 1, which is **characterized in that** the hard material is made up of one or more of the materials within the group made up of polypropylene (PP), polyamide (PA), polyoxymethylene or polyformaldehide or polyacetal (POM), or polyethylene (PE), and the soft material is one or more of the materials within the group made up of ethylene propylene diene polymer (terpolymer) (EPDM), polyvinyl chloride (PVC), Styrene Butadiene Styrene (SBS), or Acryl-nitrile Butadiene Rubber (NBR).

3. Body (1) of a fuel cap unit according to claim 1, which is **characterized in that** the connection between the hard base (5) and the end of the fuel pipe is performed by means of screws, and the connection means (7) in the hard base (5) are holes into which the screws are inserted.

4. Body (1) of a fuel cap unit according to claim 1, which is **characterized in that** the connection between the hard base (5) and the end of the fuel pipe is performed by means of clips, and the connection means (7) in the hard base (5) are the clips.

5. Body (1) of a fuel cap unit according to claim 1, which is **characterized in that** the connection between the hard base (5) and the end of the fuel pipe is performed by means of adhesive.

6. Production method of a body (1) of a fuel cap unit according to claim 1, which comprises an injection process of hard plastic material to produce the hard part (3), the hard base (5) and the bridges (2), and an injection process of soft plastic material to the aforementioned (3, 5, 2), to produce the soft part (4).

7. Production method, according to claim 6, which is **characterized in that** the hard plastic material is one or more of the materials within the group made up of polypropylene (PP), polyamide (PA), polyoxymethylene, or polyformaldehide or polyacetal (POM), or polyethylene (PE), and the soft plastic material is one or more of the materials within the group made up of ethylene propylene diene polymer (terpolymer) (EPDM), polyvinyl chloride (PVC), Styrene Butadiene Styrene (SBS), or Acryl-nitrile Butadiene Rubber (NBR).

## Patentansprüche

1. Gehäuse (1) einer Tankdeckeleinheit, bei dem das Gehäuse (1) ein Element ist, das etwa die Form eines Beckens aufweist, mit dem der Tankdeckel der Tankdeckeleinheit und das Ende der Kraftstoffleitung eines Motorfahrzeuges verbunden sind, wobei das Gehäuse (1) einen harten Teil (3) aus hartem Material sowie einen weichen Teil (4) aus weichem Material umfasst, worin auf den weichen Teil (4) eine harte Unterlage (5) folgt, die aus einem harten Material besteht, und derart angeordnet ist, dass der weiche Teil (4) im Wesentlichen zwischen der harten Unterlage (5) und dem harten Teil (3) gelegen ist, wobei das Gehäuse (1) sich durch Folgendes auszeichnet:
- die harte Unterlage (5), mit der das Ende der Kraftstoffleitung verbunden werden muss, sorgt für das Verbindungsmittel (7) zur Verbindung des Endes der Kraftstoffleitung;
- die harte Unterlage (5) ist mit dem harten Teil (3) mit Hilfe von mindestens einer Brücke (2) aus hartem Material verbunden.

2. Gehäuse (1) einer Tankdeckeleinheit entsprechend Anspruch 1, **dadurch gekennzeichnet, dass** das harte Material aus einem oder mehreren Materialien innerhalb der Gruppe besteht, die sich aus Polypropylen (PP), Polyamid (PA), Polyoxymethylen oder Polyformaldehyd oder Polyacetal zusammensetzt, und das weiche Material aus einem oder mehreren Materialien innerhalb der Gruppe besteht, die sich aus Ethylen-Propylen-Dien-Polymer (Terpolymer) (EPDM), Polyvinylchlorid (PVC), StyrolButadien-Styrol (SBS) oder Acrylnitril-Butadien-Kautschuk (NBR) zusammensetzt.

3. Gehäuse (1) einer Tankdeckeleinheit entsprechend Anspruch 1, **dadurch gekennzeichnet, dass** die Verbindung zwischen der harten Unterlage (5) und dem Ende der Kraftstoffleitung mit Hilfe von Schrauben erzielt wird, und das Verbindungsmittel (7) auf der harten Unterlage (5) aus Löchern besteht, in welche die Schrauben eingefügt werden.

4. Gehäuse (1) einer Tankdeckeleinheit entsprechend Anspruch 1, **dadurch gekennzeichnet, dass** die Verbindung zwischen der harten Unterlage (5) und dem Ende der Kraftstoffleitung mit Hilfe von Klammerns erzielt wird, und das Verbindungsmittel (7) auf der harten Unterlage (5) aus den Klammerns besteht.

5. Gehäuse (1) einer Tankdeckeleinheit entsprechend Anspruch 1, **dadurch gekennzeichnet, dass** die Verbindung zwischen der harten Unterlage (5) und dem Ende der Kraftstoffleitung mit Hilfe von Klebstoff erzielt wird

6. Produktionsmethode für das Gehäuse (1) einer Tankdeckeleinheit entsprechend Anspruch 1, die einen Einspritzvorgang von hartem Plastikmaterial zur Erzeugung des harten Teils (3), der harten Unterlage (5) und der Brücken (2) umfasst, sowie einen Einspritzvorgang von weichem Plastikmaterial in die vorher genannten Elemente (3, 5, 2), um den weichen Teil (4) zu erzeugen.

7. Produktionsmethode entsprechend Anspruch 6, **dadurch gekennzeichnet, dass** das harte Plastikmaterial aus einem oder mehreren Materialien innerhalb der Gruppe besteht, die sich aus Polypropylen (PP), Polyamid (PA), Polyoxymethylen oder Polyformaldehyd oder Polyacetal zusammensetzt, und das weiche Plastikmaterial aus einem oder mehreren Materialien innerhalb der Gruppe besteht, die sich aus Ethylen-Propylen-Dien-Polymer (terpolymer) (EPDM), Polyvinylchlorid (PVC), StyrolButadien-Styrol (SBS) oder Acrylnitril-Butadien-Kautschuk (NBR) zusammensetzt.

## Revendications

1. Corps (1) d'un ensemble de bouchon de réservoir de carburant, où le corps (1) est un élément de la forme d'un bassin environ, sur lequel le bouchon de réservoir de carburant de l'ensemble de bouchon de réservoir de carburant et l'extrémité d'un tuyau de carburant d'un véhicule à moteur sont connectés, où le corps (1) comprend un partie dure (3) fabriquée dans un matériau dur et une partie molle (4) fabriquée dans un matériau mou, où la partie molle (4) est suivie d'une base dure (5) qui est fabriquée dans un matériau dur, placée de telle sorte que la partie molle (4) est située entre la base dure (5) et la partie dure (3), le corps (1) étant **caractérisé par le fait que**
- la base dure (5), sur laquelle l'extrémité du tuyau de carburant doit être connectée, fournit les moyens de raccordement (7) pour connecter l'extrémité du tuyau de carburant;
- la base dure (5) est raccordée à la partie dure (3) au moyen d'au moins un pont (2) en matériau dur.

2. Corps (1) d'un ensemble de bouchon de réservoir de carburant selon la revendication 1, **caractérisé par le fait que** le matériau dur est composé d'un ou de plusieurs matières du groupe polypropylène (PP), polyamide (PA), polyoxyméthylène ou polyformaldéhide ou polyacétal (PüM) ou polyéthylène (PE) et le matériau doux est un ou plusieurs des matériaux du groupe éthylène-propylène-diène (terpolymère) (EPDM), polychlorure de vinyle, (PCV), Plastique Styrène Butadiène (8B8) ou Nitrile (NBR).

3. Corps (1) d'un ensemble de bouchon de réservoir de carburant selon la revendication 1, **caractérisé par le fait que** le raccord entre la base dure (5) et l'extrémité du tuyau de carburant est réalisée au moyen de vis, et que les moyens de connexion (7) dans la base dure (5) sont des orifices dans lesquels les vis sont introduites.

4. Corps (1) d'un ensemble de bouchon de réservoir de carburant selon la revendication 1, **caractérisé par le fait que** le raccord entre la base dure (5) et l'extrémité du tuyau de carburant est réalisé au moyen de clips, et que les moyens de connexion (7) dans la base dure (5) sont les clips.

5. Corps (1) d'un ensemble de bouchon de réservoir de carburant selon la revendication 1, **caractérisé par le fait que** le raccord entre la base dure (5) et l'extrémité du tuyau de carburant est réalisé au moyen d'un adhésif.

6. Méthode de production d'un corps (1) d'un ensemble de bouchon de réservoir de carburant selon la revendication 1, qui comprend un processus d'injection de matériau plastique dur pour produire la partie dure (3), la base dure (5) et les ponts (2) et un processus d'injection de matériau plastique mou sur les points ci-dessus (3, 5, 2) pour produire la partie molle (4).

7. Méthode de production, selon la revendication 6, qui est **caractérisée par le fait que** le matériau de plastique dur est constitué d'un ou de plusieurs matériaux du groupe de polypropylène (PP), polyamide (PA) ou polyoxyméthylène. Ou du polyformaldéhide ou polyacétal (POM), ou polyéthylène et que le matériau plastique mou est constitué d'un ou de plusieurs matériaux du groupe éthylène-propylène-diène (terpolymère) (EPDM), polychlorure de vinyle (PVC), plastique styrène butadiène (5BS) ou Nitrile (NBR).
